(19) ))) Europäisches Patentamt
European Patent Office
Office européen des brevets

(11) **EP 4 434 716 B1**

(12) **EUROPÄISCHE PATENTSCHRIFT**

(45) Veröffentlichungstag und Bekanntmachung des Hinweises auf die Patenterteilung:
**30.07.2025   Patentblatt 2025/31**

(21) Anmeldenummer: **23163153.2**

(22) Anmeldetag: **21.03.2023**

(51) Internationale Patentklassifikation (IPC):
*B29C 48/09* (2019.01)   *B29C 48/13* (2019.01)
*B29C 48/21* (2019.01)   *B29C 48/30* (2019.01)
*B29C 48/32* (2019.01)   *F16L 9/19* (2006.01)
*F16L 11/118* (2006.01)   *F16L 11/22* (2006.01)
*H02G 3/04* (2006.01)

(52) Gemeinsame Patentklassifikation (CPC):
**B29C 48/09; B29C 48/13; B29C 48/21; B29C 48/303; B29C 48/32; F16L 9/19; F16L 11/118; F16L 11/22; H02G 3/0468; H02G 3/0481;** B29C 48/2566

(54) **KUNSTSTOFFROHR**

PLASTIC TUBE

TUYAU EN MATIÈRE PLASTIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**25.09.2024   Patentblatt 2024/39**

(73) Patentinhaber: **Hegler, Ralph-Peter, Dr.-Ing. 97688 Bad Kissingen (DE)**

(72) Erfinder: **Hegler, Ralph-Peter, Dr.-Ing. 97688 Bad Kissingen (DE)**

(74) Vertreter: **Rau, Schneck & Hübner Patentanwälte Rechtsanwälte PartGmbB Königstraße 2 90402 Nürnberg (DE)**

(56) Entgegenhaltungen:
EP-A1- 2 378 174         CN-A- 101 910 700
DE-A1- 102013 109 111    KR-A- 20080 057 795
US-A1- 2013 300 024

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Kunststoffrohr.

Rohre mit mehreren innenliegenden Kammern, die auch als Mehrfachkanäle bezeichnet werden, sind beispielsweise bekannt aus DE 10 2013 109 111 A1, CN 101 910 700 A, KR 2008 0057795 A, US 2013/300024 A1 und EP 2 378 174 A1 und finden beispielsweise für die Wasseraufbereitung in der Abwassertechnik oder als Kabelschutzrohre Anwendung. Insbesondere offenbart die DE 10 2013 109 111 A1 einen Schlauch mit mehreren Lumen, wobei der Schlauch aufweist: eine einen Innenbereich definierende im Wesentlichen runde Basiswand; mehrere sich von der Basiswand radial nach außen erstreckenden Wellungen; eine innerhalb der Basiswand angeordnete Trennwand, um den Innenbereich in wenigstens ein erstes Lumen und ein zweites Lumen zu unterteilen, wobei die Trennwand an der runden Basiswand befestigt ist; eine erste Auswölbung, die sich von der runden Basiswand zwischen benachbarten Wellungen in einem lokalen Bereich um die Trennwand herum nach außen erstreckt, wobei die Trennwand an der ersten Auswölbung befestigt ist; eine zweite Auswölbung, die sich von der runden Basiswand zwischen benachbarten Wellungen in einem lokalen Bereich um die Trennwand herum nach außen erstreckt, wobei die Trennwand an der zweiten Auswölbung befestigt ist. In Kabelschutzrohre wird beispielsweise ein Rohrbündel mit mehreren miteinander verbundenen Innenrohren eingezogen. Die Herstellung und insbesondere die Installation der Kabelschutzrohre ist aufwändig. Die Herstellung von Kunststoffrohren mit innenliegender Trennwand weist Limitationen mit Blick auf die Gestaltungsfreiheit des Kunststoffrohres auf. Für die Anordnung und Befestigung der Trennwand müssen separate Befestigungsmittel an der Rohrinnenseite angebracht werden. Die Herstellung muss in mehreren Schritten und durch manuelle Zusatztätigkeiten erfolgen.

Der Erfindung liegt die Aufgabe zugrunde, die Herstellung eines Kunststoffrohres mit Mehrfachkanälen und mit gewellter oder gerippter Außenseite zu vereinfachen.

Diese Aufgabe ist durch ein Kunststoffrohr mit den im Anspruch 1 angegebenen Merkmalen gelöst.

Erfindungsgemäß wurde erkannt, dass an einer, insbesondere glatten, Rohrinnenseite eines Kunststoffrohres mindestens ein Führungselement integral ausgebildet werden kann. Das mindestens eine Führungselement dient zum Halten eines Trennelements, das den Rohrinnenraum in Mehrfachkanäle unterteilt. Das Trennelement dient als Trennwand zur Kanaltrennung im Kunststoffrohr. Das Trennelement kann seitliche Durchbrüche aufweisen, um eine Verbindung zwischen den getrennten Kanälen zu ermöglichen. Die Durchbrüche können beispielsweise bei einer Wasseraufbereitung und/oder bei einer Wasservorreinigung hilfreich sein.

Das Trennelement kann an dem mindestens einen Führungselement definiert und insbesondere unkompliziert positioniert werden. Insbesondere ist das Trennelement in Umfangsrichtung um die Rohrlängsachse ortsfest und insbesondere winkelgenau festgelegt. Das Trennelement kann in axialer Richtung in das Kunststoffrohr eingeschoben werden. Die Herstellung ist vereinfacht.

Das Trennelement kann durch Kunststoff-Spritzguss oder in einem additiven Verfahren, insbesondere durch 3D-Druckverfahren hergestellt werden. Das Trennelement kann auch manuell hergestellt werden.

Das mindestens eine Führungselement ist entlang der Rohrlängsachse orientiert, also axial ausgerichtet. Das mindestens eine Führungselement ist einteilig an der Rohrinnenseite angeformt. Die Rohrinnenseite ist mit Ausnahme des mindestens einen Führungselements zylindrisch ausgeführt. Die Rohraußenseite des Kunststoffrohres weist senkrecht zu der Rohrlängsachse orientierte Erhebungen auf. Das Kunststoffrohr ist insbesondere ein Verbundrohr mit einem glatten Innenrohr und einem damit verbundenen, insbesondere verschweißten, gewellten Außenrohr, wie es beispielsweise aus EP 0 563 575 A2 bekannt ist. Das Kunststoffrohr kann auch ein Rippenrohr gemäß EP 0 531 750 A2 sein. Die Herstellung derartiger Rippenrohre ist bekannt aus DE 24 50 171 C2.

Das Kunststoffrohr, insbesondere der Rohrgrundkörper und das Trennelement, ist aus einem Kunststoffmaterial, insbesondere aus thermoplastischem Kunststoffmaterial hergestellt.

Das Trennelement ist insbesondere an mindestens einer weiteren Stützstelle an der Rohrinnenseite abgestützt und zuverlässig, insbesondere verdrehsicher bezüglich der Rohrlängsachse, in dem Kunststoffrohr gehalten. Es ist auch denkbar, mehrere Trennelemente zu verwenden, die jeweils an mindestens einem Führungselement gehalten sind.

Das Kunststoffrohr ist als Verbundrohr ausgeführt, das sich insbesondere für die Wasseraufbereitung eignet. Das Verbundrohr weist ein einen Innendurchmesser aufweisendes Innenrohr auf, der mindestens 100 mm beträgt. Das Verbundrohr weist ein Außenrohr auf, das mit dem Innenrohr verschweißt ist, wobei das Außenrohr einen Durchmesser aufweist. Eine typische Durchmesserrelation des Verbundrohres von Außendurchmesser zu Innendurchmesser beträgt mindestens 1,15, insbesondere mindestens 1,20 und insbesondere mindestens 1,25. Typische Durchmesser-Fertigungstoleranzen bezogen auf den Außendurchmesser oder bezogen auf den Innendurchmesser betragen ± 0,25 % bis ± 0,5 %.

Die Ausführung des Trennelements als Platte ist unkompliziert und kosteneffizient. In Abhängigkeit der Anwendung, insbesondere der Anzahl der erforderlichen Kanäle, kann das Trennelement als offenes Profil, insbesondere als Kreuzprofil ausgeführt sein. Das Trennelement kann in einer zur Rohrlängsachse senkrechten Ebene mehrere Stege aufweisen, die insbesondere so angeordnet sein können, dass unterschiedlich große Kanäle im Rohr gebildet werden. Das Trennelement ermöglicht einen großen Gestaltungsspielraum bei der Ausbildung der Innenkanäle.

Ein Kunststoffrohr gemäß Anspruch 2 ermöglicht eine hohe Gestaltungsfreiheit hinsichtlich des mindestens einen Führungselements. Insbesondere kann das mindestens eine Führungselement in Abhängigkeit der herzustellenden Kanalaufteilung als Nut, also als radiale Vertiefung an der Rohrinnenseite, oder als Steg, also als radial erhabene Struktur an der Rohrinnenseite, ausgeführt sein.

Ein Kunststoffrohr gemäß Anspruch 3 ermöglicht eine zuverlässige und insbesondere fehlerfreie Herstellung des mindestens einen Führungselements. Eine abgerundete Kontur des mindestens einen Führungselements vermeidet herstellungsbedingte Fehlstellen. Die verwendeten Rundungsradien sind abhängig vom Nenndurchmesser des Kunststoffrohres und betragen insbesondere mindestens 2,0 mm.

Ein Kunststoffrohr gemäß Anspruch 4 gewährleistet die zuverlässige und stabile Anordnung des Trennelements mit genau einem Führungselement. Eine Höhe des Führungselements beträgt mindestens 1,0 % des Innendurchmessers und insbesondere mindestens 1,0 % des Außendurchmessers.

Ein Kunststoffrohr gemäß Anspruch 5 ermöglicht eine stabile Anordnung des Trennelements zwischen zwei in Umfangsrichtung um die Rohrlängsachse benachbart angeordneten Führungselementen. Zwischen den Führungselementen ist ein Führungsspalt gebildet, in dem das mindestens eine Trennelement angeordnet und darin gehalten ist.

Ein Kunststoffrohr gemäß Anspruch 6 weist mehrere, insbesondere gegenüberliegend angeordnete Führungselemente auf. Gegenüberliegend bedeutet insbesondere diametral gegenüberliegend bezüglich der Rohrlängsachse, also mit einem Drehwinkel von 180° bezüglich der Rohrlängsachse. Gegenüberliegend im Sinne des Anspruchs bedeutet aber auch einen Drehwinkel bezüglich der Rohrlängsachse, der kleiner ist als 180° und insbesondere mindestens 90° beträgt. Das Trennelement ist insbesondere an den mehreren Führungselementen jeweils gehalten.

Ein Kunststoffrohr gemäß Anspruch 7 ermöglicht eine zuverlässige Befestigung des Trennelements an mehreren Führungselementen. Die dafür erforderliche Höhe der Führungselemente beträgt mindestens 0,5 % des Innendurchmessers und insbesondere mindestens 0,5 % des Außendurchmessers.

Bei dem Kunststoffrohr gemäß Anspruch 8 ist das Trennelement besonders stabil angeordnet. Mit einer mindestens dem mindestens einen Führungselement korrespondierenden Stirnseitenkontur ist das Trennelement formschlüssig in Umfangsrichtung um die Rohrlängsachse in dem Kunststoffrohr angeordnet.

Weitere Merkmale, Vorteile und Einzelheiten der Erfindung ergeben sich aus der nachfolgenden Beschreibung von Ausführungsbeispielen anhand der Zeichnung. Es zeigen:

Fig. 1    eine Vorrichtung zur kontinuierlichen Herstellung eines Rohrgrundkörpers eines erfindungsgemäßen Kunststoffrohres,

Fig. 2    einen Längsschnitt eines Spritzkopfes der Vorrichtung in Fig. 1,

Fig. 3    eine vergrößerte Detaildarstellung im Längsschnitt eines Kühldorns des Spritzkopfes gemäß Fig. 2 mit einer nutförmigen Formstruktur,

Fig. 4    eine Schnittdarstellung gemäß Schnittlinie IV-IV in Fig. 3,

Fig. 5    eine vergrößerte Detaildarstellung einer Formstruktur gemäß Detail V in Fig. 4,

Fig. 6    eine Fig. 5 entsprechende Darstellung einer geänderten Formstruktur gemäß einem weiteren Ausführungsbeispiel,

Fig. 7 bis 9    Fig. 3 bis 5 entsprechende Darstellungen eines Kühldorns mit erhabener Formstruktur,

Fig. 10    eine Fig. 9 entsprechende Darstellung einer Formstruktur gemäß einem weiteren Ausführungsbeispiel,

Fig. 11 bis 13    eine teilgeschnittene Seitenansicht eines erfindungsgemäßen Kunststoffrohres als Verbundrohr mit einem als Steg ausgeführten Führungselement mit kreuzprofilförmigem Trennelement,

Fig. 14 und 15    weitere Ausführungsbeispiele von Kunststoffrohren mit gegenüberliegend angeordneten Führungselementen und mit verschiedenartigen Trennelementen,

Fig. 16 bis 18    Fig. 11 bis 13 entsprechende Darstellungen eines Verbundrohres gemäß einem weiteren Ausführungsbeispiel mit einem als Nut ausgeführten Führungselement,

Fig. 19    eine Fig. 18 entsprechende Darstellung eines Kunststoffrohrs gemäß einem weiteren Ausführungsbeispiel mit zwei benachbart angeordneten, jeweils als Steg ausgeführten Führungselementen und einem dazwischen angeordneten Trennelement.

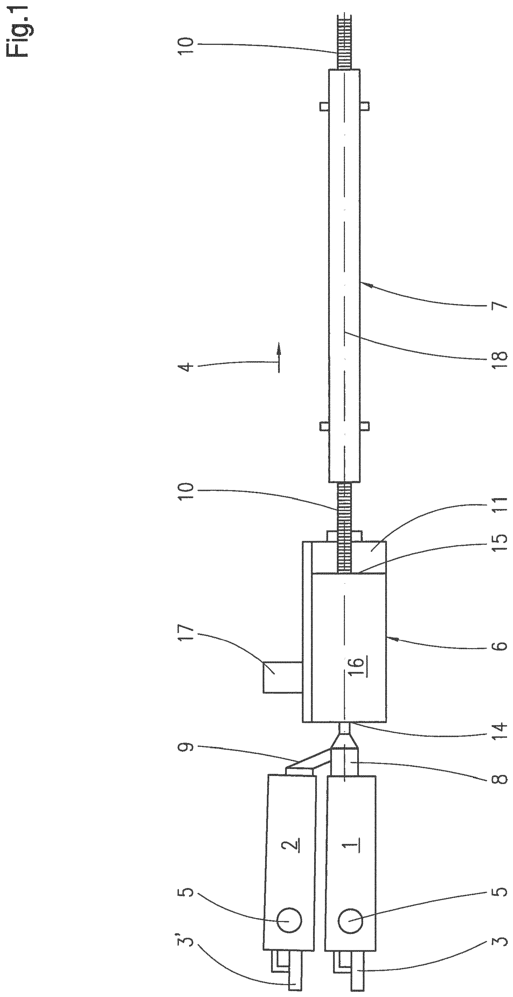

Eine in Fig. 1 dargestellte Vorrichtung zur Herstellung von Verbundrohren weist zwei Extruder 1, 2 auf. Diese werden jeweils von einem drehzahlregelbaren Antriebsmotor 3, 3' angetrieben, der - bezogen auf eine Förderrichtung 4 der gesamten Vorrichtung - stromaufwärts von Zuführtrichtern 5 der Extruder 1, 2 vorgesehen ist.

Bezogen auf die Förderrichtung 4 stromabwärts von den Extrudern 1, 2 ist eine Formmaschine 6, ein sogenannter Corrugator, angeordnet, dem wiederum eine Nachkühlvorrichtung 7 nachgeordnet ist. An einem fluchtend mit der Formmaschine 6 und der Nachkühlvorrichtung 7 angeordneten Extruder 1 ist ein Quer-Spritzkopf 8 angebracht, der in die Formmaschine 6 hineinragt. Der andere, seitlich dieses Extruders 1 angeordnete Extruder 2 ist über einen seitlich in den Quer-Spritzkopf 8 einmündenden Spritzkanal 9 mit dem Quer-Spritzkopf 8 verbunden. Wie schematisch in Fig. 1 angedeutet ist, wird in der Formmaschine 6 ein Verbundrohr 10 geformt, das in Förderrichtung 4 aus der Formmaschine 6 austritt und in der Nachkühlvorrichtung 7 abgekühlt wird. Hinter dieser Nachkühlvorrichtung 7 kann es dann in Stücke geeigneter Länge geschnitten werden. Die Formmaschine 6 ist in ihrem Aufbau bekannt und beispielsweise in der EP 0 563 575 A2 beschrieben, worauf ausdrücklich verwiesen wird.

Sie weist im Wesentlichen einen Maschinentisch 11 auf, auf dem Halbkokillen 12, 12' angeordnet sind, die jeweils zu zwei sogenannten Ketten 13, 13' miteinander verbunden sind. Diese Ketten 13, 13' werden am - bezogen auf die Förderrichtung 4 - stromaufwärtigen Einlaufende 14 und an ihrem stromabwärtigen Auslaufende 15 über nicht dargestellte Umlenkrollen geführt. Sie werden bei dem Umlauf in Förderrichtung 4 derart geführt, dass jeweils zwei Halbkokillen 12, 12' zu einem Kokillen-Paar vereinigt werden, wobei wiederum in Förderrichtung 4 hintereinander folgende Kokillen-Paare dicht an dicht liegen. Der Antrieb der auf einer Formstrecke 16 jeweils zu Kokillen-Paaren zusammengeführten Halbkokillen 12, 12' erfolgt mittels eines Antriebsmotors 17.

Der Quer-Spritzkopf 8 weist zwei konzentrisch zu einer gemeinsamen Mittellängsachse 18 angeordnete Schmelzekanäle, nämlich einen inneren Schmelzekanal 19 und einen äußeren Schmelzekanal 20, die - bezogen auf die Förderrichtung 4 - stromabwärts in einer Innendüse 21 bzw. einer Außendüse 22 enden. Der innere Schmelzekanal 19 ist an einem Spritzkanal 23 des fluchtend mit der Formmaschine 6 angeordneten Extruders 1 angeschlossen, wogegen der äußere Schmelzekanal 20 an den Spritzkanal 9 des anderen Extruders 2 angeschlossen ist.

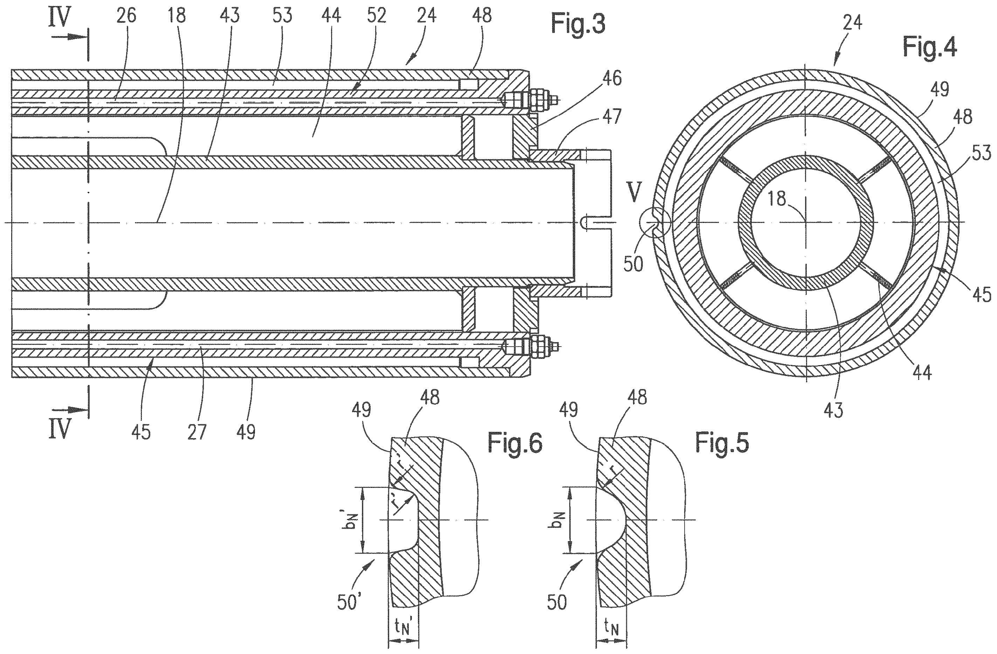

Am - bezogen auf die Förderrichtung 4 - stromabwärtigen Ende des Spritzkopfes 8 ist an diesem ein Kalibrierdorn 24 angebracht, der ebenfalls konzentrisch zur Mittellängsachse 18 verläuft. Er weist Kühlkanäle 25 für Kühlmedium, insbesondere Kühlwasser, auf, das über eine Kühlwasser-Vorlaufleitung 26 zugeführt und eine Kühlwasser-Rücklaufleitung 27 abgeführt wird. Die Leitungen 26, 27 können durch einen konzentrisch zur Mittellängsachse 18 im Spritzkopf 8 ausgebildeten, etwa rohrförmigen Versorgungskanal geführt sein. Alternativ können die Leitungen 26, 27 auch im Kalibrierdorn 24 integriert ausgeführt sein, wie in Fig. 3 und 4 dargestellt.

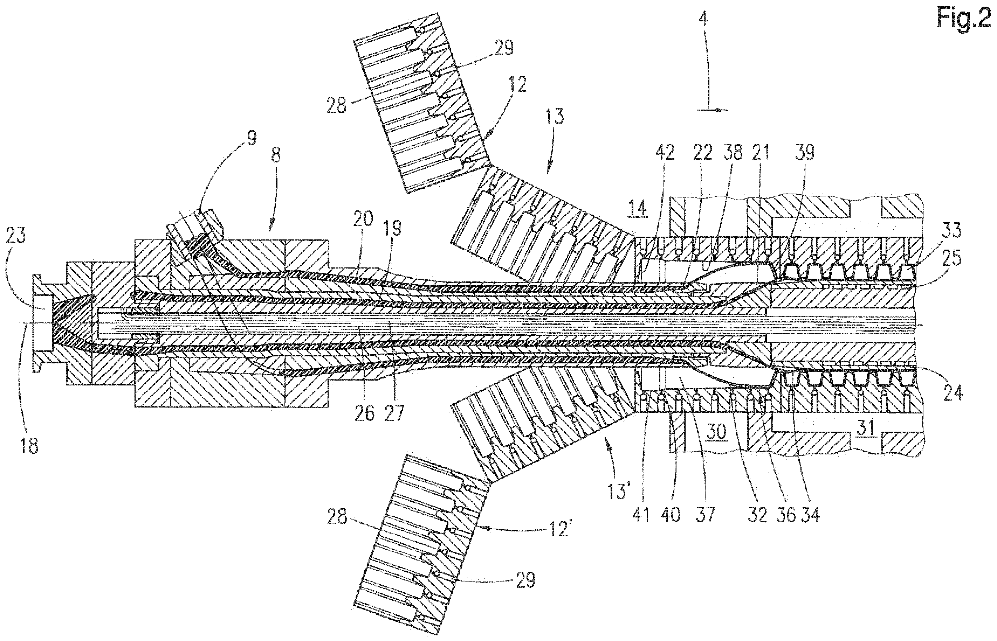

Die Halbkokillen 12, 12' weisen ringförmige Formausnehmungen 28 auf, die in regelmäßigen Abständen hintereinander angeordnet sind und die jeweils an Teilvakuumkanälen 29 angeschlossen sind. Beim Einlauf der Halbkokillen 12, 12' in die Formstrecke 16 gelangen die Teilvakuumkanäle 29 - wie Fig. 2 entnehmbar ist - an Teilvakuumversorgungsquellen 30, 31, so dass die Formausnehmungen 28 mit Teilvakuum beaufschlagt werden.

Die vom Extruder 2 durch den Spritzkanal 9 dem Spritzkopf 8 zugeführte Kunststoffschmelze strömt durch den äußeren Schmelzekanal 20 zur Außendüse 22 und wird dort unter Formung eines Außenrohres 32 extrudiert. Aufgrund des Teilvakuums legt sich das Außenrohr 32 unter Formung eines mit Querrillen versehenen Rohres in die Formausnehmungen 28. Die Querrillen bilden Erhebungen 33 an der Rohraußenseite. Aus dem Extruder 1 wird durch den Spritzkanal 23 dem Quer-Spritzkopf 8 Kunststoffschmelze zugeführt und strömt durch den inneren Schmelzekanal 19 zur Innendüse 21 und tritt dort als Innenrohr 34 aus, das auf den Kalibrierdorn 24 gelangt. Dieser erweitert sich von der Innendüse 21 in Förderrichtung 4 leicht nach außen, bis das Innenrohr 34 gegen die Wellentäler 35 des Außenrohres 32 gelangt und mit diesem verschweißt wird.

Das Innenrohr 34 und das Außenrohr 32 bilden nach Abkühlung und Erstarrung einen Rohrgrundkörper des Verbundrohres 10.

Wie insbesondere in Fig. 2 ersichtlich ist, sind die Halbkokillen 12, 12' so ausgebildet, dass jeweils in vorgegebenen Abständen innerhalb des endlos hergestellten Verbundrohres 10 Rohrmuffen 36 ausgebildet werden. Hierzu ist in einem Paar von Halbkokillen 12, 12' eine im Wesentlichen zylindrische Muffenausnehmung 37 ausgebildet, die also eine im Wesentlichen glatte, zylindrische Wand 38 aufweist.

Zwischen der Wand 38 der Muffenausnehmung 37 und der in Förderrichtung 4 voreilenden Formausnehmung 28 ist ein Übergangsabschnitt 39 ausgebildet. An das - in Förderrichtung 4 - nacheilende Ende der Wand 38 der Muffenausnehmung 37 schließt sich ein kegelstumpfförmiger Formabschnitt 40 an, in dem ein sich nach außen erweiterndes Einführende 41 der Muffe 36 ausgeformt wird. Daran schließt sich wiederum ein Übergangsabschnitt 42 an, der zur nächsten - in Förderrichtung 4 nacheilenden - Formausnehmung 28 führt.

Soweit die Vorrichtung bis hierher beschrieben ist, ist sie im Wesentlichen aus EP 0 995 579 A2 bekannt, worauf ausdrücklich verwiesen wird.

Nachfolgend wird anhand von Fig. 3 bis 5 eine besondere Ausgestaltung des Kalibrierdorns 24 näher erläutert. Der Kalibrierdorn 24 dient zum Kühlen und Kalibrieren des Innenrohres 34 bei der Verbundrohrherstellung. Der Kalibrierdorn ist ein Kühl-/Kalibrierdorn.

Der Kalibrierdorn 24 weist ein konzentrisch zur Mittellängsachse 18 orientiertes Tragrohr 43 auf, an dessen Außenseite mehrere, gemäß dem gezeigten Ausführungsbeispiel vier, radial bezüglich der Mittellängsachse 18 orientierte Stützstege 44 angeordnet sind.

Konzentrisch zu dem Tragrohr 43 ist ein Kühlmantel 45 mit einem Kühldornkern 52 angeordnet, in dem die Kühlwasser-Vorlaufleitung 26 und die Kühlwasser-Rücklaufleitung 27 integriert sind. Der Kühlmantel 45 ist axial bezüglich der Mittellängsachse 18 an dem Tragrohr 43 mittels einer Haltescheibe 46 und einer Axialhülse 47 axial gesichert. Die Haltescheibe 46 ist als Ringscheibe ausgeführt und an ihrem Außendurchmesser an dem Kühldornkern 52 befestigt.

Der Kühlmantel 45 ist, insbesondere im Bereich seines axialen Endes, insbesondere derart gestuft ausgeführt, dass die Außenhülse 48 radial beabstandet zu dem Kühldornkern 52 angeordnet ist. Der Kühlmantel 45 umfasst den rohrförmigen Kühldornkern 52. In dem Kühldornkern 52 sind die Kühlwasser-Vorlaufleitung 26 und die Kühlwasser-Rücklaufleitung 27 angeordnet, insbesondere bezüglich der Mittellängsachse 18 diametral gegenüberliegend. Die Leitungen 26, 27 verlaufen parallel zur Mittellängsachse 18.

Zwischen dem Kühldornkern 52 und der Außenhülse 48 ist ein Ringspalt 53 gebildet, der als Kühlstrecke für den Kalibrierdorn 24 dient.

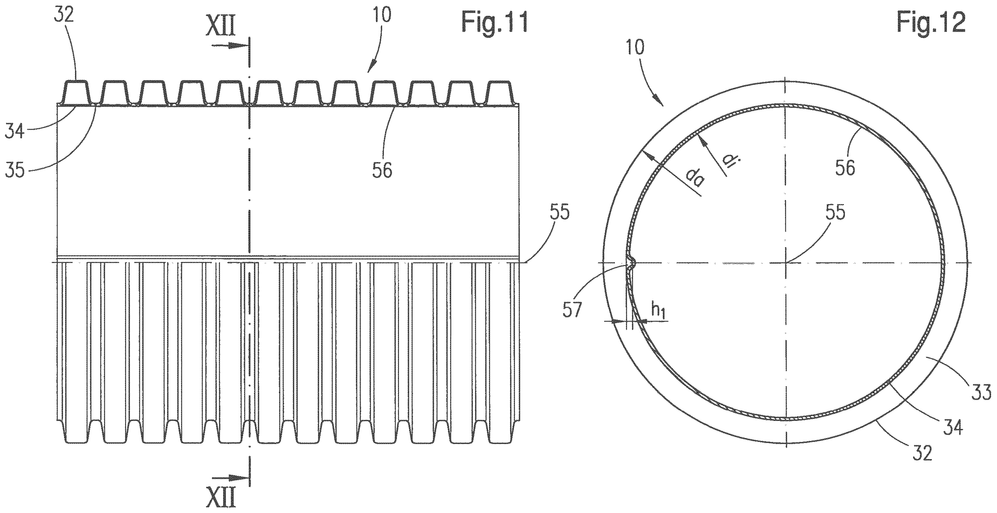

An dem Kühlmantel 45 ist eine Außenhülse 48 angeordnet und daran gehalten. Die Außenhülse 48 ist hohlzylindrisch ausgeführt und weist an ihrer Außenseite 49 eine Formstruktur 50 auf, die in Fig. 5 vergrößert dargestellt ist. Die Formstruktur 50 ist als Außennut an der Außenhülse 48 ausgeführt. Die Außennut weist in der zur Mittellängsachse 18 senkrecht orientierten Ebene, die der Zeichenebene in Fig. 4 entspricht, eine Halbkreisform auf mit einer Nuttiefe $t_N$ und einer Nutbreite $b_N$. Bei der halbkreisförmigen Ausgestaltung ist die Nutbreite $b_N$ doppelt so groß wie die Nuttiefe $t_N$. An dem Übergang zur Außenseite 49 ist die Nutkontur mit einem Rundungsradius r von mindestens 2,0 mm abgerundet. Wenn das Innenrohr 34 bei der Herstellung des Verbundrohres 10 über den Kalibrierdorn 24 gekühlt und kalibriert wird, bildet sich in der Formstruktur 50 an dem Innenrohr 34 ein korrespondierendes Führungselement 57 aus, das anhand von Fig. 11 bis 13 noch näher erläutert wird.

Wie in Fig. 6 dargestellt, kann die Formstruktur 50° auch im Wesentlichen rechteckförmig ausgeführt sein, mit einer Nuttiefe $t_N$' und einer Nutbreite $b_N$'. Gemäß dem gezeigten Ausführungsbeispiel ist die Nutbreite $b_N$' etwa doppelt so groß wie die Nuttiefe $t_N$'. Insbesondere gilt: $b_N$' = 1,0 x $t_N$' ... 3,0 x $t_N$'. Die Nutkontur ist am Übergang zur Außenseite 49 und im Nutgrund mit Rundungsradien r' abgerundet.

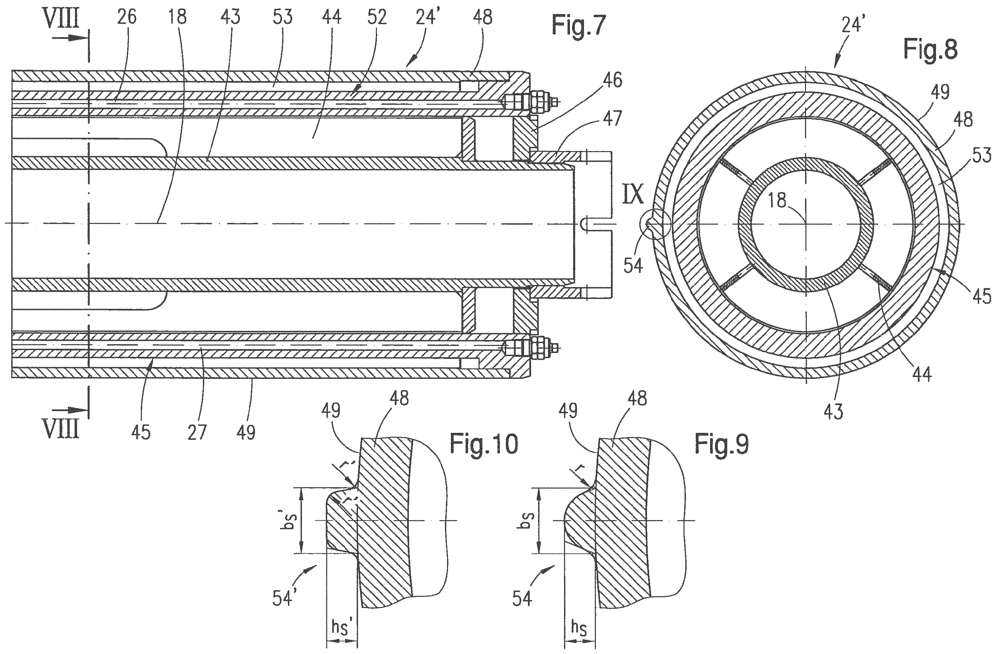

Der in Fig. 7 bis 9 dargestellte Kalibrierdorn 24' entspricht bezüglich seines Grundaufbaus dem Kalibrierdorn 24, worauf hiermit verwiesen wird.

Einziger Unterschied bei dem Kalibrierdorn 24' ist die Ausgestaltung der Formstruktur 54, die als erhabener Steg an der Außenseite 49 der Außenhülse 48 ausgebildet ist. Der Steg kann, wie in Fig. 9 gezeigt, eine Halbkreisform aufweisen, mit einer Steghöhe $h_S$ und einer Stegbreite $b_S$. Im Übergangsbereich der Stegkontur zur Außenseite 49 sind Rundungsradien r vorhanden, die mindestens 2,0 mm betragen.

Wie in Fig. 10 gezeigt, kann die stegartige Formstruktur 54' im Wesentlichen rechteckförmig ausgeführt mit einer Steghöhe $h_S$', einer Stegbreite $b_S$' und entsprechenden Rundungsradien r'. Insbesondere gilt: $b_S$' = 1,0 x $h_S$' ... 3,0 x $h_S$'.

Ein mit der Vorrichtung und dem Kühldorn 24 gemäß Fig. 3 bis 5 hergestellter Rohrgrundkörper des Verbundrohres 10 ist in Fig. 11 bis 13 dargestellt. Das Verbundrohr 10 ist ein Kunststoffrohr und weist eine Rohrlängsachse 55 auf. Bei dem Verbundrohr 10 ist das Innenrohr 34 mit dem Außenrohr 32 im Bereich der Wellentäler 35 verschweißt. Bei dem Außenrohr 32 sind die Querrillen als senkrecht zur Rohrlängsachse 55 orientierte Erhebungen 33 ausgebildet. Das Außenrohr 32 bildet eine Rohraußenseite des Verbundrohres 10. Das Innenrohr 34 ist bezüglich der Rohrlängsachse 55 zylindrisch ausgeführt mit einer glatten Rohrinnenseite 56.

Infolge der nutförmigen Formstruktur 50 des Kalibrierdorns 24 weist das Innenrohr 34 ein integral ausgebildetes, also einteilig angeformtes, Führungselement 57 auf. Die Kontur des Führungselements 57 korrespondiert zu der Kontur der Formstruktur 50. Das Führungselement 57 erstreckt sich parallel zur Rohrlängsachse 55. Das Führungselement 57 ist axial orientiert. Das Führungselement 57 bildet einen Führungssteg oder eine Führungsschiene.

Das Führungselement 57 ragt in den vom Rohrgrundkörper umschlossenen Rohrinnenraum vor mit einer ersten Höhe $h_1$, die mindestens 1,0 % des Innendurchmessers $d_i$ des Innenrohrs 34 beträgt. Insbesondere gilt:
$h_1 \geq 1{,}5 \% \times d_i$, insbesondere 2,0 % x $d_i$ und insbesondere $h_1 \geq 2{,}5 \% \times d_i$. Insbesondere gilt $h_1 = t_N$.

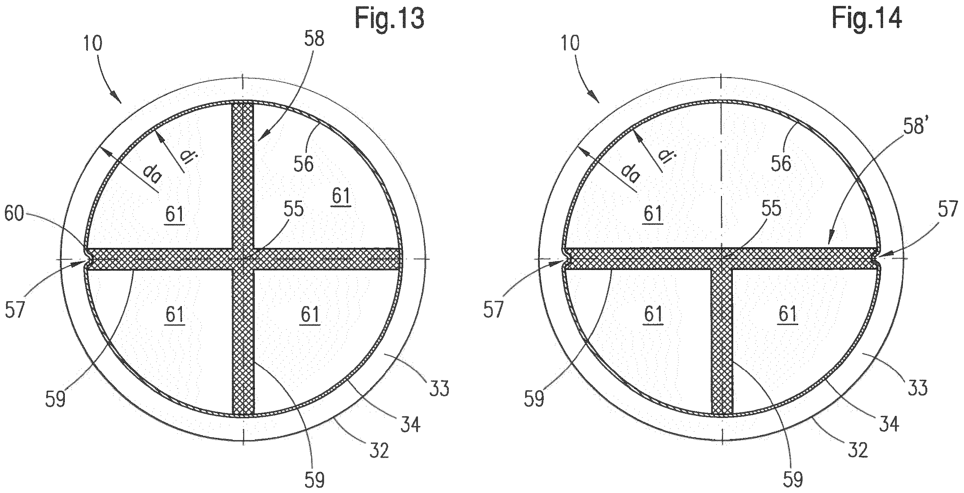

An dem Führungselement 57 ist bei dem erfindungsgemäßen Kunststoffrohr gemäß Fig. 13 ein Trennelement 58 gehalten. Das Trennelement 58 ist als Kreuzprofil ausgeführt und konzentrisch zur Rohrlängsachse 55 angeordnet. Das Trennelement 58 weist zwei sich kreuzende Stege 59 auf, die zentral und einteilig miteinander verbunden sind. Der dem Führungselement 57 zugewandte Steg 59 weist eine dem Führungselement 57 korrespondierende Stirnseitenkontur 60 auf, mit der das Trennelement 58 in das Innenrohr 34 einschiebbar und an dem Führungselement 57 gehalten ist. Das Trennelement 58 ist verdrehsicher und winkelgenau bezüglich der Rohrlängsachse 55 in dem Verbundrohr 10 gehalten. Mit dem Trennelement 58 wird der Rohrinnenraum des Verbundrohres 10 in vier, insbesondere gleich große, Teilkanäle 61 unterteilt. Das Führungselement 57 garantiert eine Verdrehsicherung des Trennelements 58 bezüglich der Rohrlängsachse 55. Mit den drei übrigen Stirnseiten der Stege 59 ist das Trennelement 58 jeweils an der Rohrinnenseite 56 abgestützt. Das Trennelement 58 ist robust in dem Rohrgrundkörper angeordnet. Eine unbeabsichtigte Veränderung der Drehposition des Trennelements 58 ist zuverlässig verhindert.

Gemäß einem weiteren Ausführungsbeispiel gemäß Fig. 14 sind zwei Führungselemente 57 an dem Innenrohr 34 ausgebildet. Die Führungselemente 57 sind bezüglich der Rohrlängsachse 55 diametral gegenüberliegend zueinander angeordnet.

Dadurch, dass das Trennelement 58' mit zwei Führungselementen 57 in dem Innenrohr 34 gehalten ist, ist der Gestaltungsspielraum bezüglich der Geometrie des Trennelements 58' erhöht. Das Trennelement 58' kann T-förmig ausgeführt sein, weist also nur drei Stege 59 auf. Dadurch ist es möglich, das Kunststoffrohr 10 in drei, insbesondere verschieden große, Teilkanäle 61 zu unterteilen.

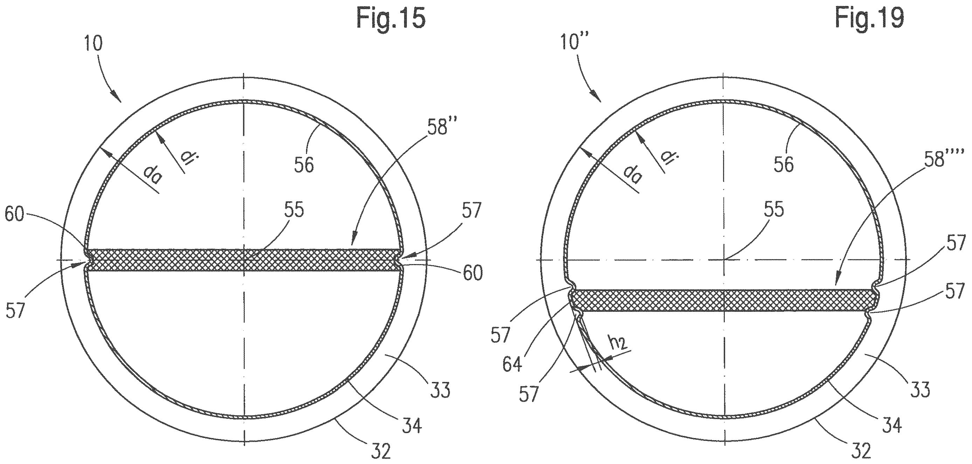

Bei dem Ausführungsbeispiel des Verbundrohres 10 gemäß Fig. 15 sind - wie in Fig. 14 - zwei gegenüberliegende Führungselemente 57 ausgebildet. Das Trennelement 58" ist plattenförmig ausgeführt mit beidseitig entsprechenden Stirnseitenkonturen 60. Das Trennelement 58" ist ausschließlich an den Führungselementen 57 gehalten. Weitere, insbesondere quer zur Plattenebene orientierte Stege zur Abstützung an der Rohrinnenseite 56 sind entbehrlich.

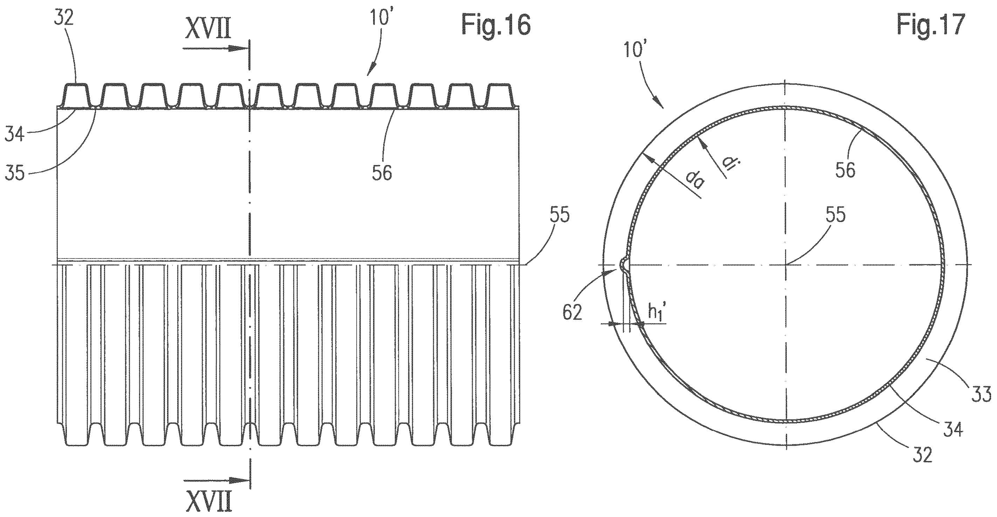

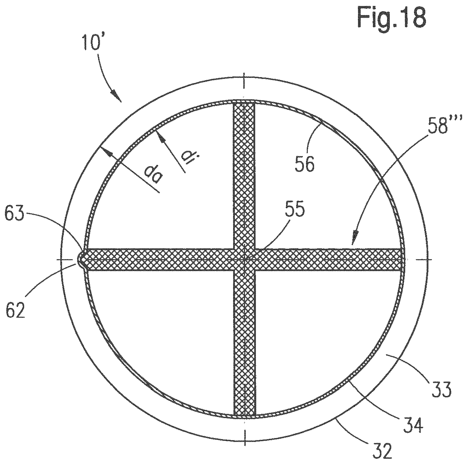

Bei einem weiteren Ausführungsbeispiel eines Verbundrohres 10' gemäß Fig. 16 bis 18 ist das Führungselement 62 entsprechend der Formstruktur 54 gemäß Fig. 7 bis 9 als Nut ausgeführt. Montage und Halterung des Trennelements 58''' erfolgen analog. Das Trennelement 58''' weist eine dem Führungselement 62 korrespondierende Stirnseitenkontur 63 auf, die als stegartige Erhebung ausgeführt ist. Es versteht sich, dass auch bei dem nutartigen Führungselement 62 mehrere Führungselemente an der Rohrinnenseite 56 ausgebildet sein können, insbesondere diametral gegenüberliegend.

Die erste Höhe $h_1$' ist insbesondere durch die Steghöhe $h_S$ der Formstruktur 54 definiert.

Bei dem Ausführungsbeispiel eines Verbundrohres 10" gemäß Fig. 19 sind jeweils zwei Führungselemente 57 benachbart zueinander bezüglich einer Umfangsrichtung um die Rohrlängsachse 55 angeordnet. Zwischen den beiden benachbarten Führungselementen 57 wird ein Führungsspalt 64 gebildet, in dem das Trennelement 58'''' gehalten ist. Diese Anordnung ist besonders robust. Insbesondere ermöglicht diese Anordnung eine bezüglich der Rohrlängsachse 55 außermittige Positionierung des Trennelements 58''''.

Die benachbarten Führungselemente 57 weisen jeweils eine zweite Höhe $h_2$ auf, die insbesondere kleiner ausgeführt sein kann als die erste Höhe $h_1$. Insbesondere gilt: $h_2 \geq 0{,}5\% \times d_i$, insbesondere $h_2 \geq 0{,}8\% \times d_i$, insbesondere $h_2 \geq 1{,}0\% \times d_i$ und insbesondere $h_2 \geq 1{,}5\% \times d_i$.

**Patentansprüche**

1. Kunststoffrohr mit

   a. senkrecht zu einer Rohrlängsachse (55) orientierten Erhebungen (33) an einer Rohraußenseite;
   b. einer Rohrinnenseite (56), an der mindestens ein parallel zur Rohrlängsachse (55) orientiertes Führungselement (57; 62) integral ausgebildet ist;
   c. einem an dem mindestens einen Führungselement (57; 62) gehaltenen Trennelement (58; 58'; 58"; 58'''; 58''''); wobei
   d. das Kunststoffrohr als Verbundrohr (10; 10'; 10") ausgeführt ist mit einem einen Innendurchmesser $d_i$ aufweisenden Innenrohr (34) und mit einem mit dem Innenrohr (34) verschweißten Außenrohr (32), das einen Außendurchmesser $d_a$ aufweist, wobei gilt: $d_a / d_i \geq 1{,}15$;
   e. das Trennelement als Platte (58"; 58'''') oder als offenes Profil (58; 58'; 58''') ausgeführt ist.

2. Kunststoffrohr gemäß Anspruch 1, **dadurch gekennzeichnet, dass** das mindestens eine Führungselement als Nut (62) oder als Steg (57) ausgeführt ist.

3. Kunststoffrohr gemäß einem der vorstehenden Ansprüche, **dadurch gekennzeichnet, dass** das mindestens eine Führungselement (57; 62) in einer zur Rohrlängsachse (55) senkrecht orientierten Ebene eine Kontur aufweist, deren Radien (r; r') mindestens 2,0 mm betragen.

4. Kunststoffrohr gemäß einem der vorstehenden Ansprüche, **dadurch gekennzeichnet, dass** genau ein Führungselement (57; 62) vorhanden ist, das gegenüber der Rohrinnenseite (56) in radialer Richtung bezüglich der Rohrlängsachse (55) eine erste Höhe $h_1$; $h_1$' aufweist, wobei gilt $h_1 \geq 1{,}0\% \cdot d_i$ oder $h_1' \geq 1{,}0\% \cdot d_i$.

5. Kunststoffrohr gemäß einem der vorstehenden Ansprüche, **dadurch gekennzeichnet, dass** zwischen zwei in Umfangsrichtung um die Rohrlängsachse (55) benachbart angeordnete Führungselemente (57) ein Führungsspalt (64) gebildet ist, in dem das Trennelement (58'''') angeordnet ist.

**6.** Kunststoffrohr gemäß einem der vorstehenden Ansprüche, **dadurch gekennzeichnet, dass** mehrere Führungselemente (57; 62) vorhanden sind, an denen das Trennelement (58'; 58"; 58"") gehalten ist.

**7.** Kunststoffrohr gemäß einem der Ansprüche 1 bis 5, **dadurch gekennzeichnet, dass** mehrere Führungselemente (57; 62) vorhanden sind, die jeweils gegenüber der Rohrinnenseite (56) in radialer Richtung bezüglich der Rohrlängsachse (55) eine zweite Höhe $h_2$ aufweisen, wobei gilt $h_2 \geq 0{,}5\ \% \cdot d_i$.

**8.** Kunststoffrohr gemäß einem der vorstehenden Ansprüche, **dadurch gekennzeichnet, dass** das Trennelement (58; 58'; 58"; 58"') eine dem mindestens einen Führungselement (57; 62) korrespondierende Stirnseitenkontur (60; 63) aufweist.

**Claims**

**1.** A plastic pipe comprising

   a. elevations (33) oriented to be perpendicular to a pipe longitudinal axis (55) on an outer side of the pipe;
   b. a pipe inner side (56) on which at least one guide element (57; 62) oriented to be parallel to the pipe longitudinal axis (55) is integrally formed;
   c. a separating element (58; 58'; 58"; 58"'; 58"") held on the at least one guide element (57; 62); **wherein**
   d. the plastic pipe is designed as a composite pipe (10; 10'; 10") with inner pipe (34) having an inner diameter $d_i$ and an outer pipe (32) which is welded to the inner pipe (34) and has an outer diameter $d_a$, wherein: $d_a / d_i \geq 1.15$;
   e. the separating element is designed as a plate (58"; 58"") or as an open profile (58; 58'; 58"').

**2.** A plastic pipe according to claim 1, **characterized in that** the at least one guide element is designed as a groove (62) or as a web (57).

**3.** A plastic pipe according to any one of the preceding claims, **characterized in that** the at least one guide element (57; 62) has, in a plane oriented perpendicularly to the pipe longitudinal axis (55), a contour whose radii (r;r') are at least 2.0 mm.

**4.** A plastic pipe according to any one of the preceding claims, **characterized in that** there is exactly one guide element (57; 62) which has a first height $h_1;h_1'$ relative to the pipe inner side (56) in the radial direction with respect to the pipe longitudinal axis (55), wherein $h_1 \geq 1.0\% \cdot d_i$ or $h_1' \geq 1.0\% \cdot d_i$.

**5.** A plastic pipe according to any one of the preceding claims, **characterized in that** a guide gap (64), in which the separating element (58"") is arranged, is formed between two guide elements (57) arranged adjacently in the circumferential direction about the pipe longitudinal axis (55).

**6.** A plastic pipe according to any one of the preceding claims, **characterized in that** there is a plurality of guide elements (57; 62) on which the separating element (58'; 58"; 58"") is held.

**7.** A plastic pipe according to any one of claims 1 to 5, **characterized in that** a plurality of guide elements (57; 62) are present, each of which has a second height $h_2$ relative to the pipe inner side (56) in the radial direction with respect to the pipe longitudinal axis (55), wherein $h_2 \geq 0.5\ \% \cdot d_i$.

**8.** A plastic pipe according to any one of the preceding claims, **characterized in that** the separating element (58; 58'; 58"; 58"') has an end face contour (60; 63) corresponding to the at least one guide element (57; 62).

**Revendications**

**1.** Tube en matière plastique comportant

   a. des surélévations (33) orientées perpendiculairement à un axe longitudinal de tube (55) sur une face extérieure de tube ;
   b. une face intérieure de tube (56) sur laquelle est formé d'un seul tenant au moins un élément de guidage (57 ; 62) orienté parallèlement à l'axe longitudinal de tube (55) ;
   c. un élément de séparation (58 ; 58' ; 58'' ; 58''' ; 58"") maintenu sur ledit au moins un élément de guidage (57 ; 62) ;
   dans lequel
   d. le tube en matière plastique est réalisé sous la forme d'un tube composite (10 ; 10' ; 10") avec un tube intérieur (34) présentant un diamètre intérieur $d_i$ et avec un tube extérieur (32) soudé au tube intérieur (34) et présentant un diamètre extérieur $d_a$, où :

$$d_a / d_i \geq 1,15\ ;$$

   e. l'élément de séparation est réalisé sous la forme d'une plaque (58" ; 58"") ou d'un profilé ouvert (58 ; 58' ; 58"').

**2.** Tube en matière plastique selon la revendication 1, **caractérisé en ce que** ledit au moins un élément de guidage est réalisé sous la forme d'une rainure (62) ou d'une nervure (57).

3. Tube en matière plastique selon l'une des revendications précédentes, **caractérisé en ce que** ledit au moins un élément de guidage (57 ; 62) présente, dans un plan orienté perpendiculairement à l'axe longitudinal de tube (55), un contour dont les rayons (r ; r') sont d'au moins 2,0 mm.

4. Tube en matière plastique selon l'une des revendications précédentes, **caractérisé en ce qu'**il est prévu exactement un élément de guidage (57 ; 62) qui présente, par rapport à la face intérieure de tube (56), dans la direction radiale par rapport à l'axe longitudinal de tube (55), une première hauteur $h_1$ ; $h_1'$, où $h_1 \geq 1,0\% \cdot d_i$ ou $h_1' \geq 1,0\% \cdot d_i$.

5. Tube en matière plastique selon l'une des revendications précédentes, **caractérisé en ce qu'**entre deux éléments de guidage (57) disposés de manière adjacente dans la direction circonférentielle autour de l'axe longitudinal de tube (55), il est formé un interstice de guidage (64) dans lequel l'élément de séparation (58'''') est disposé.

6. Tube en matière plastique selon l'une des revendications précédentes, **caractérisé en ce que** plusieurs éléments de guidage (57 ; 62) sont prévus, sur lesquels l'élément de séparation (58' ; 58" ; 58'''') est maintenu.

7. Tube en matière plastique selon l'une des revendications 1 à 5, **caractérisé en ce que** plusieurs éléments de guidage (57 ; 62) sont prévus, qui présentent chacun, par rapport à la face intérieure de tube (56), une deuxième hauteur $h_2$ dans la direction radiale par rapport à l'axe longitudinal de tube (55), où $h_2 \geq 0,5\% \cdot d_i$.

8. Tube en matière plastique selon l'une des revendications précédentes, **caractérisé en ce que** l'élément de séparation (58 ; 58' ; 58" ; 58''') présente un contour frontal (60 ; 63) correspondant audit au moins un élément de guidage (57 ; 62).

Fig.1

Fig.2

EP 4 434 716 B1

Fig.3

Fig.4

Fig.5

Fig.6

EP 4 434 716 B1

Fig.7

Fig.8

Fig.9

Fig.10

EP 4 434 716 B1

Fig.11

Fig.12

EP 4 434 716 B1

Fig.14

Fig.13

Fig.17

Fig.16

Fig.18

Fig.15

Fig.19

EP 4 434 716 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013109111 A1
- CN 101910700 A
- KR 20080057795 A
- US 2013300024 A1
- EP 2378174 A1
- EP 0563575 A2
- EP 0531750 A2
- DE 2450171 C2
- EP 0995579 A2